# EUROPEAN PATENT APPLICATION

(11) **EP 4 290 198 A2**
(43) Date of publication of application: **13.12.2023**
(21) Application number: 23178389.5
(22) Date of filing: 09.06.2023
(51) Int. Cl.: G01K 1/14, G01K 1/02, H01M 10/48

(54) **TEMPERATURE SENSOR DEVICE AND BATTERY MODULE**

(30) Priority: 10.06.2022 JP 2022094310; 10.06.2022 JP 2022094311; 10.06.2022 JP 2022094312
(71) Applicant: Envision AESC Japan Ltd., Zama-shi, Kanagawa 252-0012 (JP)
(72) Inventor: OKAZUMI, Ryoma, Zama, 252-0012 (JP)
(74) Representative: Dennemeyer & Associates S.A.

(57) **Abstract**

A temperature sensor device (40) including a temperature sensor (420) and an elastic member (440) placed between the temperature sensor (420) and a pressing body that presses the temperature sensor (420) toward a battery cell (100).

## Description

This application is based on Japanese patent application NO. 2022-094310, filed on June 10, 2022, Japanese patent application NO. 2022-094311, filed on June 10, 2022, and Japanese patent application NO. 2022-094312, filed on June 10, 2022, the content of which is incorporated hereinto by reference.

### TECHNICAL FIELD

The present invention relates to a temperature sensor device and a battery module.

### BACKGROUND ART

In recent years, various temperature sensor devices attached to a battery module have been developed. For example, a temperature sensor device described in Japanese Patent Application Publication No. 2013-171697 includes a temperature sensor, and an energization part for energizing the temperature sensor toward a battery module. The energization part includes a warp part. The energizing part energizes the temperature sensor toward the battery module by elastic deformation of the warp part. For example, a temperature sensor device described in Japanese Patent Application Publication No. 2007-109536 includes a thermistor element attached to a battery cell included in a battery module, and another thermistor element attached to another battery cell included in the battery module.

### SUMMARY

### (Aspect 1)

For example, in the temperature sensor device described in Japanese Patent Application Publication No. 2013-171697, the warp part is required for a configuration of fixing the temperature sensor to the battery module. Simplification of a configuration of the temperature sensor device may be however difficult when the warp part is provided.

One example of an object of an aspect 1 of the present invention is to fix a temperature sensor to a battery cell with a simple configuration. Other objects of the aspect 1 of the present invention will be evident from statements in the present description.

### (Aspect 2)

When a battery cell is subjected to temperature control of heating or cooling, a temperature change of the battery cell may vary depending on a position on the battery cell. Detection of different temperature changes in a plurality of positions of the battery cell may be difficult when, for example, there is only one temperature sensor provided for one battery cell as described in Japanese Patent Application Publication No. 2007-109536.

One example of an object of an aspect 2 of the present invention is to detect different temperature changes at a plurality of positions of a battery cell. Other objects of the aspect 2 of the present invention will be evident from statements in the present description.

### (Aspect 3)

A voltage detection device for detecting voltage of a battery cell may be provided in a battery module. In this case, improvement of workability in attaching the temperature sensor to the battery cell may be difficult when, for example, attachment of the temperature sensor device described in Japanese Patent Application Publication No. 2013-171697 to the battery module and attachment of the voltage detection device to the battery module are performed separately.

One example of an object of an aspect 3 of the present invention is to improve workability in attaching a temperature sensor to a battery cell. Other objects of the aspect 3 of the present invention will be evident from statements in the present description.

The aspect 1 of the present invention is as follows.
1.1 A temperature sensor device including:
   a temperature sensor; and
   an elastic member placed between the temperature sensor and a pressing body that presses the temperature sensor toward a battery cell.
1.2 The temperature sensor device according to 1.1, wherein
   the temperature sensor is flexible.
1.3 The temperature sensor device according to 1.1 or 1.2, further including
   a supporting plate supporting the temperature sensor .
1.4 The temperature sensor device according to any one of 1.1 to 1.3, wherein
   the temperature sensor is thermally isolated from the pressing body.
1.5 The temperature sensor device according to any one of 1.1 to 1.4, wherein
   the temperature sensor is disposed at a lateral side of the battery cell.
1.6 A battery module including:
   the battery cell; and
   the temperature sensor device according to any one of 1.1 to 1.5.

The aspect 2 of the present invention is as follows.
2.1 A temperature sensor device including
   a plurality of temperature sensors attached at a plurality of positions of a battery cell.
2.2 The temperature sensor device according to 2.1, wherein
   temperature changes at the plurality of positions of the battery cell under a predetermined condition differs from one another.
2.3 The temperature sensor device according to 2.1 or 2.2, further including
   at least one other temperature sensor attached to at least one position of another battery cell different form the battery cell.
2.4 The temperature sensor device according to 2.3, wherein
   temperature changes in the battery cell and the another battery cell under a predetermined condition differ from each other.
2.5 The temperature sensor device according to any one of 2.1 to 2.4, further including
   a supporting body to which the plurality of temperature sensors are attached.
2.6 The temperature sensor device according to any one of 2.1 to 2.5, wherein
   the plurality of temperature sensors are disposed at a lateral side of the battery cell.
2.7 A battery module including:
   the battery cell; and
   the temperature sensor device according to any one of 2.1 to 2.6.

The aspect 3 of the present invention is as follows.
3.1 A temperature sensor device including
   a temperature sensor attached to a voltage detection device to detect voltage of a battery cell.
3.2 The temperature sensor device according to 3.1, further including
   a supporting body attached to the voltage detection device and supporting the temperature sensor.
3.3 The temperature sensor device according to 3.1 or 3.2, wherein
   the temperature sensor is attached to the voltage detection device by an insulating fixture.
3.4 The temperature sensor device according to any one of 3.1 to 3.3, wherein
   a plurality of the temperature sensors are attached to the voltage detection device.
3.5 The temperature sensor device according to any one of 3.1 to 3.4, wherein
   the temperature sensor is disposed at a lateral side of the battery cell.
3.6 A battery module including:
   the battery cell;
   the voltage detection device; and
   the temperature sensor device according to any one of 3.1 to 3.5

According to the aspect 1 of the present invention, a temperature sensor can be fixed to a battery cell with a simple configuration.

According to the aspect 2 of the present invention, different temperature changes at a plurality of positions of a battery cell can be detected.

According to the aspect 3 of the present invention, workability in attaching a temperature sensor to a battery cell can be improved.

### BRIEF DESCRIPTION OF THE DRAWINGS

The above and other objects, advantages and features of the present invention will be more apparent from the following description of certain preferred embodiments taken in conjunction with the accompanying drawings, in which:
Fig. 1 is an exploded perspective view of a battery module according to an embodiment;
Fig. 2 is a rear perspective view illustrating a temperature sensor device according to the embodiment, as well as some battery cells, a bottom cover, and a front voltage detection device;
Fig. 3 is an enlarged view of a lower left part of the front voltage detection device and the temperature sensor device according to the embodiment when viewed from behind;
Fig. 4 is a plan view illustrating a temperature sensor illustrated in Fig. 3, as well as an elastic member;
Fig. 5 is a left-side view illustrating the temperature sensor illustrated in Fig. 3, as well as the elastic member;
Fig. 6 is a diagram for describing a method of attaching the front voltage detection device and the temperature sensor device to a cell stacked body;
Fig. 7 is a diagram for describing the method of attaching the front voltage detection device and the temperature sensor device to the cell stacked body; and
Fig. 8 is a diagram illustrating a structure between the battery cell and the bottom cover in a state illustrated in Fig. 7 when viewed from behind.

### EMBODIMENT

The invention will be now described herein with reference to illustrative embodiments. Those skilled in the art will recognize that many alternative embodiments can be accomplished using the teachings of the present invention and that the invention is not limited to the embodiments illustrated for explanatory purposes.

In the following, an embodiment of the present invention is described by using the drawings. In all the drawings, a similar component is denoted with a similar reference sign, and description thereof is omitted as appropriate.

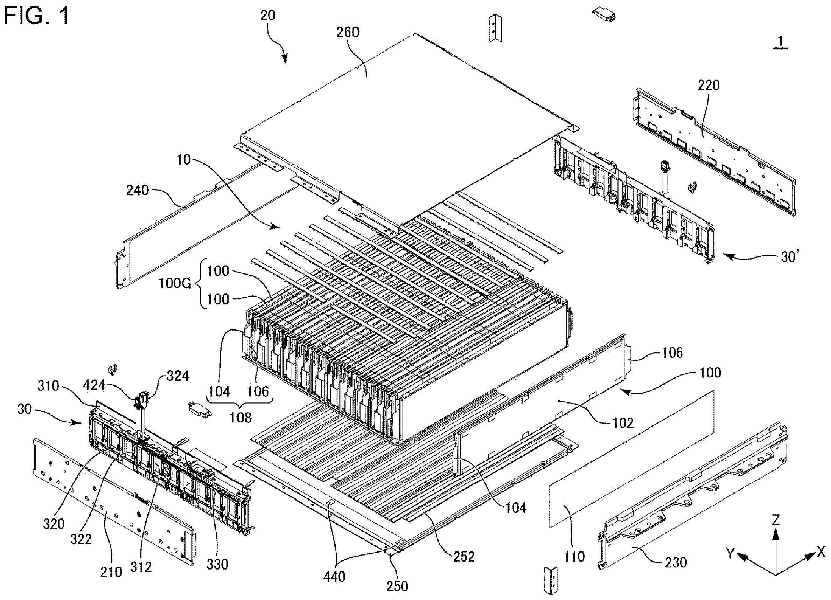

Fig. 1 is an exploded perspective view of a battery module 1 according to the embodiment.

For a purpose of description, arrows indicating X, Y, and Z directions are illustrated in each of the drawings. The X direction is a front-to-rear direction of the battery module 1. Hereinafter, unless otherwise specified, a tip side of the arrow indicating the X direction is a rear side of the battery module 1. Hereinafter, unless otherwise specified, a base side of the arrow indicating the X direction is a front side of the battery module 1. The Y direction is orthogonal to the X direction. The Y direction is a left-to-right direction of the battery module 1. Hereinafter, unless otherwise specified, a tip side of the arrow illustrating the Y direction is a left side of the battery module 1 as viewed from front, and a right side of the battery module 1 as viewed from behind.
Hereinafter, unless otherwise specified, a base side of the arrow indicating the Y direction is the right side of the battery module 1 as viewed from front, and the left side of the battery module 1 as viewed from behind. The Z direction is orthogonal to both the X direction and the Y direction. The Z direction is an up-and-down direction of the battery module 1. Hereinafter, unless otherwise specified, a tip side of the arrow illustrating the Z direction is an upper side of the battery module 1.
Hereinafter, unless otherwise specified, a base side of the arrow indicating the Z direction is a lower side of the battery module 1. Hereinafter, as necessary, a direction perpendicular to the X direction is referred to as a YZ plane direction. Hereinafter, as necessary, a direction perpendicular to the Y direction is referred to as a ZX plane direction. Hereinafter, as necessary, a direction perpendicular to the Z direction is referred to as an XY plane direction. The relation between each of the X direction, the Y direction, and the Z direction and each of the front-to-rear direction, the left-to-right direction, and the up-and-down direction of the battery module 1 is not limited to the above-described example.

The battery module 1 includes a cell stacked body 10, a housing body 20, a front voltage detection device 30, and a rear voltage detection device 30'.

The cell stacked body 10 includes a plurality of battery cells 100 and a plurality of compression pads 110. The plurality of battery cells 100 and the plurality of compression pads 110 are arranged alternately in the Y direction. The compression pads 110 are disposed on both sides of each of the battery cells 100 in the Y direction. The plurality of battery cells 100 and the plurality of compression pads 110 are compressed in the Y direction by a right cover 230 and a left cover 240 described later. This suppresses misalignment of the battery cells 100 in the ZX plane direction.

A long direction of each of the battery cells 100 is substantially in parallel with the X direction. A short direction of each of the battery cells 100 is substantially in parallel with the Z direction. A thickness direction of each of the battery cells 100 is substantially in parallel with the Y direction. The plurality of battery cells 100 are stacked in the Y direction. A shape of each of the battery cells 100 is not limited to this example.

Each of the battery cells 100 includes an unillustrated battery element, an exterior material 102, a positive electrode tab 104, and a negative electrode tab 106. The battery element includes a plurality of unillustrated positive electrodes and a plurality of unillustrated negative electrodes alternately stacked in the Y direction, and an unillustrated separator placed between the positive electrode and the negative electrode adjacent to each other in the Y direction. The exterior material 102 seals the battery element and unillustrated electrolytic liquid. The positive electrode tab 104 is electrically connected to the positive electrode of the battery element. The positive electrode tab 104 is drawn from one of both sides of the exterior material 102 in the X direction. The negative electrode tab 106 is electrically connected to the negative electrode of the battery element. The negative electrode tab 106 is drawn from the other of the both sides of the exterior material 102 in the X direction. However, a structure of each of the battery cells 100 is not limited to this example.

In the embodiment, a plurality of cell groups 100G are connected in series from the cell group 100G placed at one end in the Y direction to the cell group 100G placed at the other end in the Y direction. Each of the cell groups 100G includes the plurality of battery cells 100 connected in parallel. In the embodiment, each of the cell groups 100G includes two battery cells 100 adjacent to each other in the Y direction. Two positive electrode tabs 104 drawn from the two battery cells 100 included in each of the cell groups 100G are oriented toward a same side in the X direction. Two negative electrode tabs 106 drawn from the two battery cells 100 included in each of the cell groups 100G are oriented toward a same side in the X direction. The positive electrode tab 104 and the negative electrode tab 106 drawn from one of the cell groups 100G adjacent to each other in the Y direction, and the positive electrode tab 104 and the negative electrode tab 106 drawn from the other of the cell groups 100G adjacent to each other in the Y direction are oriented toward an opposite side to each other in the X direction. The two cell groups 100G adjacent to each other in the Y direction includes a tab group 108 placed in front or rear of the two cell groups 100G. The tab group 108 includes the positive electrode tab 104 and the negative electrode tab 106 joined to each other. The positive electrode tab 104 and the negative electrode tab 106 included in the tab group 108 are joined to each other by laser welding, for example. Thus, a plurality of the tab groups 108 placed in front of the cell stacked body 10 and a plurality of the tab groups 108 placed at rear of the cell stacked body 10 are alternately disposed in the Y direction.

A configuration of the cell stacked body 10 is not limited to the above-described example. For example, each of the cell groups 100G may include three or more battery cells 100 connected in parallel. Alternatively, a plurality of single battery cells 100 may be connected in series from the battery cell 100 placed at one end in the Y direction to the battery cell 100 placed at the other end in the Y direction.

The housing body 20 includes a front cover 210, a rear cover 220, a right cover 230, a left cover 240, a bottom cover 250, and a top cover 260. Each of the covers is made of metal, such as aluminum, for example. The front cover 210 covers front of the cell stacked body 10 and the front voltage detection device 30. The rear cover 220 covers rear of the cell stacked body 10 and the rear voltage detection device 30'. From a front view, the right cover 230 covers a right side of the cell stacked body 10. From a front view, the left cover 240 covers a left side of the cell stacked body 10. The bottom cover 250 covers a bottom of the cell stacked body 10. A thermal conductive adhesive 252 is disposed between a top surface of the bottom cover 250 and a lower end of the cell stacked body 10. This allows heat generated by the cell stacked body 10 to dissipate through the thermal conductive adhesive 252 toward a bottom of the battery module 1. The top cover 260 covers a top of the cell stacked body 10.

The front voltage detection device 30 includes a holding body 310, a plurality of voltage detection portions 320, a plurality of voltage detection lines 322, a voltage detection connector 324, and a positive electrode bus bar 330.

The holding body 310 is disposed in front of the cell stacked body 10. The holding body 310 has a plurality of openings 312. Each of the plurality of tab groups 108 placed in front of the cell stacked body 10 is exposed forward through each of the plurality of openings 312. The holding body 310 integrally holds the plurality of voltage detection portions 320 and the plurality of voltage detection lines 322.

The plurality of voltage detection portions 320 is attached to the holding body 310. Each of the plurality of voltage detection portions 320 is attached to a front face of each of the plurality of tab groups 108 placed in front of the cell stacked body 10, by laser welding, for example. The plurality of voltage detection portions 320 are electrically connected to the voltage detection connector 324 via the plurality of voltage detection lines 322. The plurality of voltage detection lines 322 are routed through the holding body 310. In the embodiment, installing the holding body 310 in a suitable position with respect to the cell stacked body 10 enables each of the plurality of voltage detection portions 320 to be disposed in a suitable position with respect to each of the plurality of tab groups 108 placed in front of the cell stacked body 10.

The positive electrode bus bar 330 is electrically connected to the positive electrode tab 104 drawn forward from the battery cell 100 placed at a right end of the cell stacked body 10 when viewed from the front. The battery module 1 is electrically connectable to another battery module, which is not illustrated, via the positive electrode bus bar 330.

The rear voltage detection device 30' is disposed at rear of the cell stacked body 10. The rear voltage detection device 30' includes, similarly to the front voltage detection device 30, a holding body and a voltage detection line held by the holding body. The rear voltage detection device 30' further includes a negative electrode bus bar electrically connected to the negative electrode tab 106 drawn rearward from the battery cell 100 placed at a left end of the cell stacked body 10 when viewed from the front.

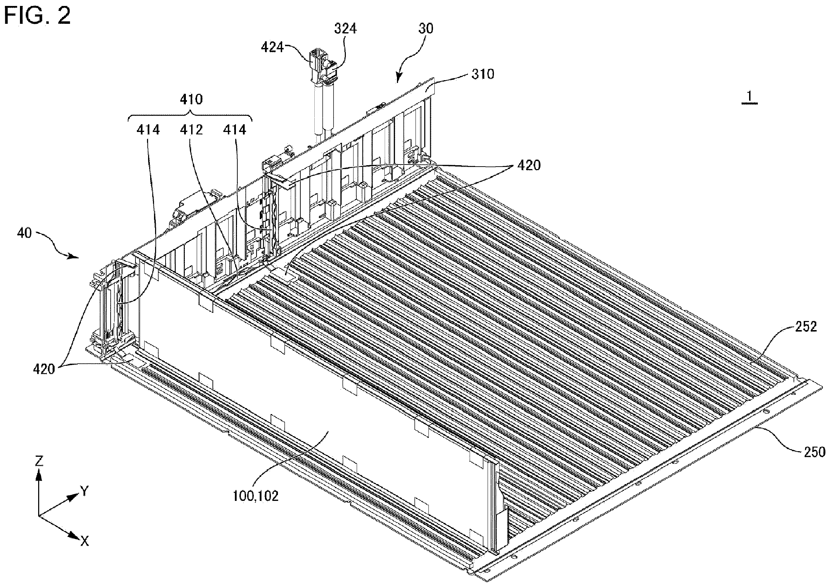

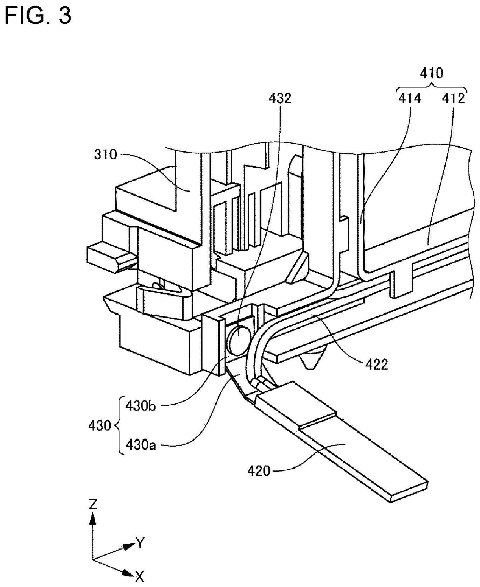

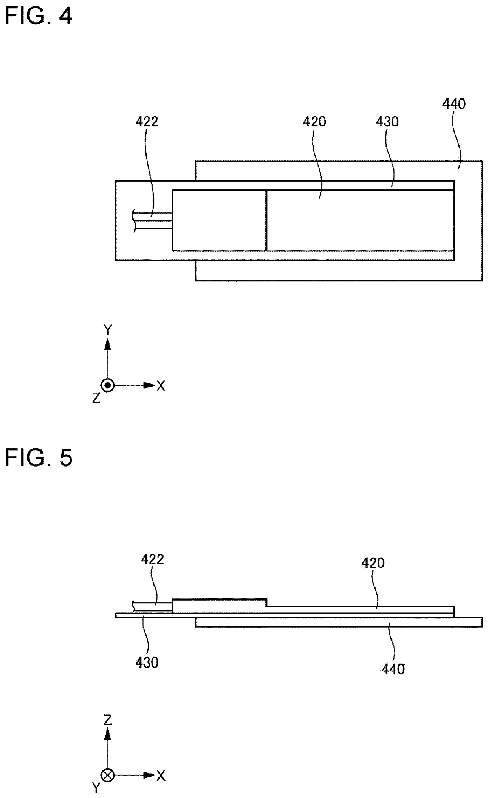

Fig. 2 is a rear perspective view illustrating a temperature sensor device 40 according to the embodiment, as well as some of the battery cells 100, the bottom cover 250, and the front voltage detection device 30. Fig. 3 is an enlarged view of a lower left part of the front voltage detection device 30 and the temperature sensor device 40 according to the embodiment when viewed from behind. Fig. 4 is a plan view illustrating a temperature sensor 420 illustrated in Fig. 3, as well as an elastic member 440. Fig. 5 is a left-side view illustrating the temperature sensor 420 illustrated in Fig. 3, as well as the elastic member 440. In Fig. 4, a white circle with a black dot indicating the Z direction indicates that the upper side of the battery module 1 is from back to front of a paper sheet, and the lower side of the battery module 1 is from the front to the back of the paper sheet is. In Fig. 5, a white circle with an X mark indicating the Y direction indicates that the right side of the battery module 1 when viewed from behind is from front to back of a paper sheet, and the left side of the battery module 1 when viewed from behind is from the back to the front of the paper sheet.

The temperature sensor device 40 is described with reference to Fig. 2.

The battery module 1 includes the temperature sensor device 40. The temperature sensor device 40 includes a supporting body 410 and two pairs of the temperature sensors 420. Each of the temperature sensors 420 is, for example, a thermistor.

When viewed from behind, the supporting body 410 is placed at rear of left side of the holding body 310. The supporting body 410 includes a horizontal extending body 412 and one pair of vertical extending bodies 414. When viewed from behind, the horizontal extending body 412 is placed at rear of lower left end of the holding body 310. The horizontal extending body 412 extends substantially in parallel to the Y direction. The pair of vertical extending bodies 414 upwardly extends substantially in parallel to the Z direction from both ends of the horizontal extending body 412 in the Y direction. When viewed from behind, the left vertical extending body 414 is placed at rear of an approximate left end part of the holding body 310. When viewed from behind, the right vertical extending body 414 is placed at rear of an approximate center part of the holding body 310.

When viewed from behind, the left-side pair of temperature sensors 420 is attached to a left end part of the horizontal extending body 412 and an upper end part of the left vertical extending body 414. The pair of temperature sensors 420 faces to each other substantially in parallel to the Z direction. The pair of temperature sensor 420 protrudes rearward from the supporting body 410. When viewed from behind, the pair of temperature sensors 420 detects a temperature of the battery cell 100 disposed at an approximate left end of the cell stacked body 10 in the Y direction. Specifically, the pair of temperature sensors 420 is disposed at an upper lateral side and a lower lateral side of a front end part of battery cell 100. Thus, the pair of temperature sensors 420 detects temperatures of an upper end part and a lower end part of the front end part of the battery cell 100. In this case, a size of the battery module 1 in the Y direction can be reduced compared to when the temperature sensor 420 is disposed between the battery cells 100 adjacent to one another in the Y direction.

When viewed from behind, the right-side pair of the temperature sensors 420 is attached to a right end part of the horizontal extending body 412 and an upper end part of the right vertical extending body 414. The pair of temperature sensors 420 faces to each other substantially in parallel to the Z direction. The pair of temperature sensors 420 protrudes rearward from the supporting body 410. When viewed from behind, the pair of the temperature sensors 420 detects a temperature of the battery cell 100 disposed at an approximate center of the cell stacked body 10 in the Y direction. Specifically, the pair of temperature sensors 420 is disposed at an upper lateral side and a lower lateral side of a front end part of the battery cell 100. Thus, the pair of temperature sensors 420 detects temperatures of an upper end part and a lower end part of the front end part of the battery cell 100. In this case, the size of the battery module 1 in the Y direction can be reduced compared to when the temperature sensor 420 is disposed between the battery cells 100 adjacent to one another in the Y direction.

A temperature of the battery cell 100 disposed at the approximate center of the cell stacked body 10 in the Y direction is less susceptible to an environment surrounding the cell stacked body 10 than a temperature of the battery cell 100 disposed at a position displaced in the Y direction from the approximate center of the cell stacked body 10 in the Y direction. Accordingly, under a predetermined condition of temperature rise of each of the battery cells 100, such as charging of the each of the battery cells 100, the temperature of the battery cell 100 disposed at the approximate center of the cell stacked body 10 in the Y direction is more likely to rise and less likely to fall than the temperature of the battery cell 100 disposed at the position displaced in the Y direction from the approximate center of the cell stacked body 10 in the Y direction. For this reason, temperature changes of the plurality of battery cells 100 included in the cell stacked body 10 under the predetermined condition differs from one another depending on a position within the cell stacked body 10 in the Y direction. In the embodiment, different temperature changes at the approximate left end and the approximate center of the cell stacked body 10 in the Y direction can be detected by the left-side pair of temperature sensors 420 and the right-side pair of temperature sensors 420. Accordingly, a temperature of the cell stacked body 10 can be controlled according to the temperature change.

In the embodiment, the thermal conductive adhesive 252 is disposed on the top surface of the bottom cover 250. Accordingly, under a predetermined condition of temperature rise of each of the battery cells 100, such as charging of each of the battery cells 100, a temperature of a lower end part of each of the battery cells 100 in the Z direction is likely to be lower than a temperature of an upper end part of each of the battery cell 100 in the Z direction due to cooling effect of the thermal conductive adhesive 252. For this reason, a temperature change of each of the battery cells 100 under the predetermined condition differs depending on a position within each of the battery cells 100 in the Z direction. In the embodiment, different temperature changes at the lower end part and the upper end part of the battery cell 100 placed at the approximate left end of the cell stacked body 10 in the Y direction can be detected by the left-side pair of temperature sensors 420 as viewed from behind. Likewise, different temperature changes at the lower end part and the upper end part of the battery cell 100 placed at the approximate center of the cell stacked body 10 in the Y direction can be detected by the right-side pair of temperature sensors 420 as viewed from behind. Accordingly, a temperature of the cell stacked body 10 can be controlled according to the temperature change.

Arrangement of the temperature sensor 420 is not limited to the disposition according to the embodiment.

For example, the temperature sensors 420 may be attached at three or more different positions of one battery cell 100 in the Z direction. For example, the temperature sensors 420 may be attached to an approximate upper end part, an approximate lower end part, and an approximate center part of the battery cell 100 in the Z direction. Different temperature changes at a plurality of positions of the battery cell 100 in the Z direction can be still detected in this example. The temperature sensors 420 may not be provided at the upper end part and the lower end part of the battery cell 100 in the Z direction. For example, one of the temperature sensors 420 may be attached to a position displaced downward from the upper end part of the battery cell 100. Likewise, another one of the temperature sensors 420 may be attached to a position displaced upward from the lower end part of the battery cell 100. Alternatively, there may be only one temperature sensor 420 attached to one battery cell 100.

The temperature sensors 420 may be attached to three or more different positions of the cell stacked body 10 in the Y direction. For example, the temperature sensors 420 may be attached to an approximate left end, an approximate center, and an approximated right end of the cell stacked body 10 in the Y direction. Different temperature changes at a plurality of positions of the cell stacked body 10 in the Y direction can be still detected in this example. The temperature sensors 420 may not be provided at the approximate center and the approximate left end of the cell stacked body 10 as viewed from behind. For example, one of the temperature sensors 420 may be attached to a position displaced rightward from the approximate left end of the cell stacked body 10 as viewed from behind. Likewise, another of the temperature sensors 420 may be attached to a position displaced leftward or rightward from the approximate center of the cell stacked body 10 as viewed from behind.

In the embodiment, the temperature sensor 420 is attached to the front end part of the battery cell 100. Accordingly, the temperature sensor 420 can be provided relatively close to the supporting body 410. Under the predetermined condition of temperature rise of each of the battery cells 100, such as charging of each of the battery cells 100, temperatures of both ends of each of the battery cells 100 in the X direction are more likely to rise and less likely to fall than a temperature of an approximate center part of each of the battery cells 100 in the X direction. Under a high input/output condition, such as rapid charging of each of the battery cells 100, temperatures of both ends of each of the battery cells 100 in the X direction are likely to be higher than a temperature of the approximate center part of each of the battery cells 100 in the X direction. In the embodiment, the temperature sensor 420 is provided at a position where a temperature of the battery cell 100 is likely to be relatively high under these conditions. Accordingly, the temperature sensor 420 can be disposed at a position desirable from a viewpoint of control of the battery cell 100. However, the temperature sensor 420 may be attached to a position rearward of the front end part of the battery cell 100. For example, the temperature sensor 420 may be attached to an approximate center of the battery cell 100 in the X direction. Alternatively, the temperature sensor 420 may be attached to a rear end part of the battery cell 100. In this example, for example, the temperature sensor 420 may be attached to the rear voltage detection device 30' illustrated in Fig. 1.

A factor that causes different temperature changes at the plurality of positions of each of the battery cells 100 in the Z direction under the above-described predetermined condition is not limited to a cooling effect of the thermal conductive adhesive 252. Specifically, the different temperature changes at the plurality of positions of each of the battery cells 100 in the Z direction under the predetermined condition differs from each other, for example, by disposing a temperature adjustment member such as a heater, a cooler, or a radiator at either one of above and below each of the battery cells 100 without disposing the temperature adjustment member at the other of above and below each of the battery cells 100.

The temperature sensor 420 attached to a lower left part of the supporting body 410 as viewed from behind is described with reference to Figs. 3 to 5. A configuration described for the temperature sensor 420 with reference to Fig. 3 is equally applicable to the temperature sensor 420 attached to other position of the supporting body 410.

The temperature sensor 420 is attached to the holding body 310 and the supporting body 410 by using a supporting plate 430 and a fixture 432. The supporting plate 430 is, for example, a plastic plate. However, a material of the supporting plate 430 is not limited to this example. The supporting plate 430 includes a protrusive part 430a and a front-end part 430b. The protrusive part 430a protrudes rearward of the supporting body 410. The temperature sensor 420 is attached to a top surface of the protrusive part 430a, for example, via an adhesive. Thus, the temperature sensor 420 is supported by the protrusive part 430a. The front-end part 430b is bent upward with respect to the protrusive part 430a. The front-end part 430b is attached to a rear surface of the horizontal extending body 412 by using the fixture 432. Thus, a position of the temperature sensor 420 in the XY plane direction can be fixed. In the example illustrated in Fig. 3, the fixture 432 is a rivet. However, the fixture 432 may be a fixture different from a rivet, such as a screw. The fixture 432 is inserted into the horizontal extending body 412 and the holding body 310 from rear of the front-end part 430b. The fixture 432 is made of an electrically insulating material such as, for example, resin. Accordingly, the fixture 432 has an insulation property. In this example, a short circuit between the exterior material 102 and the fixture 432 can be suppressed even if a metallic part of the exterior material 102 contacts the fixture 432. However, the fixture 432 may be an electric conductive material such as, for example, metal.

One end of a temperature sensor line 422 is connected to a front end part of the temperature sensor 420. The temperature sensor line 422 is routed through the supporting body 410. Accordingly, the temperature sensor line 422 is supported by the supporting body 410. The other end of the temperature sensor line 422 is electrically connected to a temperature sensor connector 424 illustrated in Figs. 1 and 2.

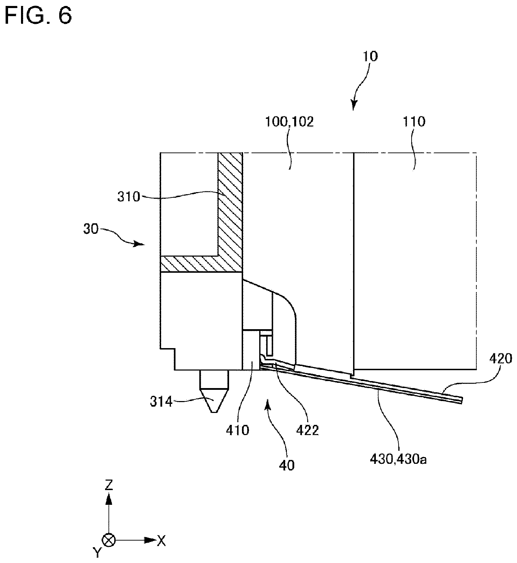

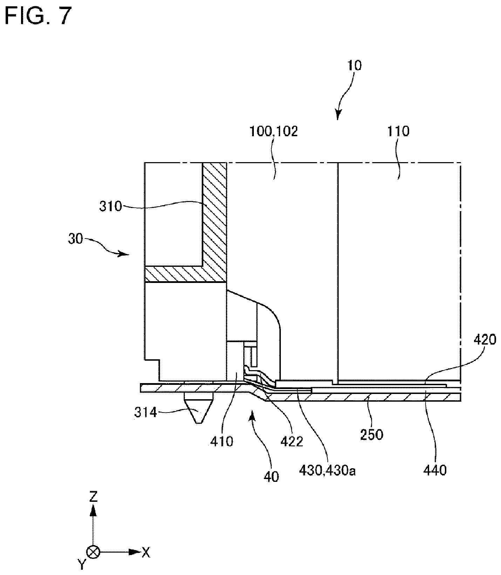

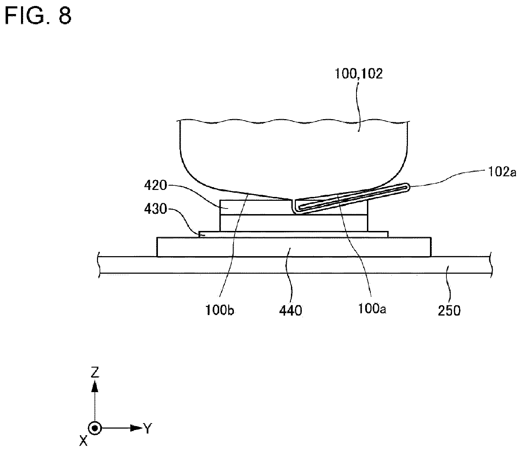

Figs. 6 and 7 are diagrams for describing a method of attaching the front voltage detection device 30 and the temperature sensor device 40 to the cell stacked body 10. Fig. 8 is a diagram illustrating a structure between the battery cell 100 and the bottom cover 250 in a state illustrated in Fig. 7 when viewed from behind. In Fig. 8, a white circle with a black dot indicating the X direction indicates that the rear side of the battery module 1 is from back to front of a paper sheet, and the front side of the battery module 1 is from the front to the back of the paper sheet.

The front voltage detection device 30 and the temperature sensor device 40 are attached to the cell stacked body 10 as follows.

First, the temperature sensor device 40 is attached to a rear surface of the front voltage detection device 30. Specifically, a front surface of the supporting body 410 is mechanically joined to a rear surface of the holding body 310, for example, by snap-fitting.

Next, as illustrated in Fig. 6, the front voltage detection device 30 to which the temperature sensor device 40 is attached is installed in front of the cell stacked body 10. Thus, each of the plurality of voltage detection portions 320 illustrated in Fig. 1 is disposed in front of each of the plurality of tab groups 108 illustrated in Fig. 1 and placed in front of the cell stacked body 10. In this state, each of the voltage detection portions 320 and each of the tab groups 108 can be joined, for example, by laser welding. In the state illustrated in Fig. 6, installing the front voltage detection device 30 at a suitable position with respect to the cell stacked body 10 enables the plurality of temperature sensors 420 illustrated in Fig. 2 to be integrally disposed at a suitable position with respect to the cell stacked body 10. Accordingly, in the embodiment, workability in attaching the temperature sensor 420 to the battery cell 100 can be improved compared to when attachment of the front voltage detection device 30 and attachment of the temperature sensor device 40 are performed separately.

The temperature sensor 420 and the supporting plate 430 are flexible. Specifically, the temperature sensor 420 is flexible between a front end part and a rear end part of the temperature sensor 420. Likewise, the supporting plate 430 is flexible between a front end part and a rear end part of the protrusive part 430a. Accordingly, the temperature sensor 420 and the supporting plate 430 can be attached along the battery cell 100 with ease. Also, the temperature sensor 420 and the supporting plate 430 can be follow positional variation of the battery cell 100 with ease. In the example illustrated in Fig. 6, a part of a top surface of the temperature sensor 420 is in contact with a front lower end part of the battery cell 100. Thus, the temperature sensor 420 and the supporting plate 430 are warped downward as viewed from the Y direction.

Next, as illustrated in Fig. 7, the bottom cover 250 is attached to the front voltage detection device 30. Specifically, the bottom cover 250 is attached to the holding body 310 by a protrusion 314 provided on a lower end part of the holding body 310 penetrating through a front end part of the bottom cover 250 in the Z direction. However, a structure for attaching the bottom cover 250 to the holding body 310 is not limited to this example. The bottom cover 250 is disposed below the cell stacked body 10 via the thermal conductive adhesive 252 illustrated in Fig. 1 with the bottom cover 250 attached to the holding body 310. As illustrated in Fig. 1, two elastic members 440 are disposed at two positions on a right front end part of the bottom cover 250 as viewed from front. In the embodiment, the elastic member 440 is a sponge. However, the elastic member 440 may be an elastic member different from a sponge, such as a plate spring. The elastic member 440 is attached to the top surface of the bottom cover 250, for example, via an adhesive. The two elastic members 440 overlap in the Z direction with the two temperature sensors 420 attached to a lower part of the supporting body 410 with the bottom cover 250 attached to the holding body 310. Accordingly, as illustrated in Fig. 8, the temperature sensor 420 and the supporting plate 430 are disposed between the lower end part of the battery cell 100 and the top surface of the bottom cover 250 in the Z direction with the bottom cover 250 attached to the holding body 310.

As illustrated in Figs. 7 and 8, the bottom cover 250 presses the temperature sensor 420 and the supporting plate 430 upward via the elastic member 440. Specifically, the bottom cover 250 is a pressing body that presses the temperature sensor 420 and the supporting plate 430 upward via the elastic member 440. Thus, the temperature sensor 420 and the supporting plate 430, which are warped as illustrated in Fig. 7, become along substantially parallel to the X direction as illustrated in Fig. 8. For this reason, as illustrated in Fig. 8, the elastic member 440 is compressed in the Z direction by the bottom cover 250 and the supporting plate 430. Accordingly, the supporting plate 430 and the temperature sensor 420 are energized toward a lower end of the battery cell 100 by the elastic member 440 with the bottom cover 250 attached to the holding body 310. For this reason, the temperature sensor 420 can be fixed to the lower end of the battery cell 100 with a simple configuration.

Similar to the example illustrated in Fig. 8, an elastic member corresponding to the elastic member 440 may also be disposed between a bottom surface of the top cover 260 and a top surface of the temperature sensor 420 attached to an upper part of the supporting body 410. In this structure, the temperature sensor 420 can be energized toward an upper end of the battery cell 100 by the elastic member. Accordingly, the temperature sensor 420 can be fixed to the upper end of the battery cell 100 with a simple configuration.

According to the description of the embodiment, the elastic member 440 can be placed between the temperature sensor 420 and a pressing body that presses the temperature sensor 420 toward the battery cell 100, such as the bottom cover 250 and the top cover 260. When the elastic member 440 is placed between the temperature sensor 420 and the pressing body, the temperature sensor 420 can be energized toward the cell stacked body 10 by the elastic member 440. Thus, the temperature sensor 420 can be fixed to the battery cell 100 with a simple configuration.

In the example illustrated in Fig. 8, the temperature sensor 420 may be thermally isolated from the bottom cover 250 by the supporting plate 430 and the elastic member 440. For example, the supporting plate 430 and the elastic member 440 may be made of a material that has a thermal isolation property. In this example, the temperature sensor 420 can accurately detect a temperature of the battery cell 100 regardless of a temperature of the bottom cover 250 even if a temperature gradient occurs between the battery cell 100 and the bottom cover 250. The temperature gradient between the battery cell 100 and the bottom cover 250 occurs, for example, when the bottom cover 250 is cooled while a temperature of the battery cell 100 rises due to charging and the like of the battery cell 100.

In the example illustrated in Fig. 8, the exterior material 102 includes a sealing side 102a. the sealing side 102a is drawn from between a right bottom surface 100a of the battery cell 100 and a left bottom surface 100b of the battery cell 100, and folded back under the right bottom surface 100a. The temperature sensor 420 is desired to be pressed toward the battery cell 100 without through the sealing side 102a. Specifically, the temperature sensor 420 is desired to contact the left bottom surface 100b of the battery cell 100. When the temperature sensor 420 is in contact with the left bottom surface 100b of the battery cell 100, a temperature of the battery cell 100 can be accurately detected by the temperature sensor 420 even if an air layer exists between the right bottom surface 100a of the battery cell 100 and the sealing side 102a. Also, the temperature sensor 420 can be easily brought into contact with the left bottom surface 100b of the battery cell 100 when the temperature sensor 420 is flexible.

While the embodiment of the present invention has been described above with reference to the drawings, the embodiment is an exemplification of the present invention, and various configurations other than those described above may be employed.

For example, in the embodiment, the temperature sensor device 40 includes the plurality of temperature sensors 420. However, the number of the temperature sensors 420 provided in the temperature sensor device 40 may be only one.

In the embodiment, the temperature sensor 420 is attached to the front voltage detection device 30 via the supporting body 410. However, the temperature sensor 420 may be directly attached to the front voltage detection device 30 without through the supporting body 410.

It is apparent that the present invention is not limited to the above embodiment and variant, and may be modified and changed without departing from the scope and spirit of the invention.

## Claims

1. A temperature sensor device (40) comprising:
a temperature sensor (420); and
an elastic member (440) placed between the temperature sensor (420) and a pressing body that presses the temperature sensor (420) toward a battery cell (100).

2. The temperature sensor device (40) according to claim 1, wherein
the temperature sensor (420) is flexible.

3. The temperature sensor device (40) according to claim 1 or 2, further comprising
a supporting plate (430) supporting the temperature sensor (420).

4. The temperature sensor device (40) according to any one of claims 1 to 3, wherein
the temperature sensor (420) is thermally isolated from the pressing body.

5. The temperature sensor device (40) according to any one of claims 1 to 4, wherein
the temperature sensor (420) is disposed at a lateral side of the battery cell (100).

6. A battery module (1) comprising:
the battery cell (100); and
the temperature sensor device (40) according to any one of claims 1 to 5.

7. A temperature sensor device (40) comprising
a plurality of temperature sensors (420) attached at a plurality of positions of a battery cell (100).

8. The temperature sensor device (40) according to claim 7, wherein
temperature changes at the plurality of positions of the battery cell (100) under a predetermined condition differ from one another.

9. The temperature sensor device (40) according to claim 7 or 8, further comprising
at least one other temperature sensor (420) attached to at least one position of another battery cell (100) different from the battery cell (100).

10. The temperature sensor device (40) according to claim 9, wherein
temperature changes in the battery cell (100) and the another battery cell (100) under a predetermined condition differ from each other.

11. A battery module (1) comprising:
the battery cell (100); and
the temperature sensor device (40) according to any one of claims 7 to 10.

12. A temperature sensor device (40) comprising
a temperature sensor (420) attached to a voltage detection device (30, 30') to detect voltage of a battery cell (100).

13. The temperature sensor device (40) according to claim 12, wherein
the temperature sensor (420) is attached to the voltage detection device (30, 30') by an insulating fixture (432).

14. The temperature sensor device (40) according to claim 12 or 13, wherein
a plurality of the temperature sensors (420) are attached to the voltage detection device (30, 30').

15. A battery module (1) comprising:
the battery cell (100);
the voltage detection device (30, 30'); and
the temperature sensor device (40) according to any one of claims 12 to 14.
